Europäisches Patentamt

European Patent Office

Office européen des brevets

(19)

(11) Numéro de publication: **0 083 278**
**A2**

(12) **DEMANDE DE BREVET EUROPEEN**

(21) Numéro de dépôt: **82402341.0**

(22) Date de dépôt: **21.12.82**

(51) Int. Cl.³: **G 02 B 7/26**

(30) Priorité: **28.12.81 FR 8124297**

(43) Date de publication de la demande:
**06.07.83 Bulletin 83/27**

(84) Etats contractants désignés:
**DE GB IT**

(71) Demandeur: **SOCAPEX**
**10 bis, quai Léon-Blum**
**F-92153 Suresnes(FR)**

(72) Inventeur: **Malinge, Jean-Louis**
**THOMSON-CSF SCPI 173, bld Haussmann**
**F-75379 Paris Cedex 08(FR)**

(74) Mandataire: **Jacquard, Philippe et al,**
**THOMSON-CSF SCPI 173, Bld Haussmann**
**F-75379 Paris Cedex 08(FR)**

(54) **Atténuateur pour liaison par fibre optique, et connecteur comprenant un tel atténuateur.**

(57) L'invention concerne les liaisons par fibre optique.

Elle consiste à modifier un connecteur connu du type comprenant deux embouts (408, 409) vissés sur une pièce de liaison (410), en polissant l'extrémité de l'un des embouts selon un angle supérieur à l'angle critique de propagation par rétro-diffusion, et en insérant entre les extrémités des embouts un fragment de film semi-réfléchissant (411). Une partie de la lumière est transmise d'une fibre dans l'autre. L'autre partie de la lumière est réfléchie vers la fibre biseautée mais ne peut se propager de manière guidée dans celle-ci.

Elle permet de réaliser des atténuateurs qui atténuent de manière uniforme tous les modes transmis, et qui ne perturbent pas l'émetteur par le signal rétrodiffusé.

Fig.3

# ATTENUATEUR POUR LIAISON PAR FIBRE OPTIQUE, ET CONNECTEUR COMPRENANT UN TEL ATTENUATEUR

La présente invention concerne les atténuateurs pour liaison par fibre optique, qui permettent d'atténuer le signal lumineux transmis sur la fibre dans une proportion déterminée, afin d'homogénéiser les puissances transmises sur des lignes optiques de longueurs différentes. Elle concerne plus particulièrement les connecteurs de tête optiques qui permettent de relier cette tête à la ligne et dans lesquels on peut introduire un tel atténuateur.

Dans les liaisons par fibre optique, il est devenu nécessaire de pouvoir atténuer le signal lumineux qui est transmis sur la liaison. En effet, à l'heure actuelle les progrès réalisés sur les différents facteurs d'atténuation, et sur la puissance des sources émettrices, sont tels que l'énergie lumineuse transmise peut arriver sur l'organe récepteur à un niveau qui sature celui-ci et produise de graves distorsions. Il n'est pas toujours possible, ni souhaitable, de réduire la puissance émise par exemple en diminuant le courant d'attaque de l'émetteur, car ceci augmente la distorsion du signal et les temps de montée. C'est par exemple le cas dans un réseau en étoile, où un émetteur unique est dimensionné pour obtenir un signal suffisant à l'extrémité de la plus longue des liaisons. La puissance du signal reçu à l'extrémité d'une autre liaison plus courte pourra alors être excessive. De même, dans un réseau comportant un grand nombre d'émetteurs qui alimentent chacun une ligne à partir d'un dispositif appelé "queue de cochon", il est souhaitable de normaliser ceux-ci, et cette normalisation se fait par rapport à la distance la plus longue et donc à la puissance la plus élevée. Il faut alors pouvoir insérer en un point adéquat de la liaison, de préférence du côté émission entre la "queue de cochon" et la ligne pour éviter un maximum de non linéarité, un organe qui permette d'atténuer le niveau du signal lumineux transmis. Bien entendu cet organe ne doit pas introduire lui-même de distorsion.

Une solution utilisée à ce jour consiste à relier deux fibres de la liaison par l'intermédiaire d'un système optique, formé par exemple de deux lentilles qui permettent d'obtenir un espace libre relativement important entre ces deux lentilles. On insère alors entre celles-ci un filtre gris neutre de densité adéquate.

Un tel dispositif est complexe et onéreux. Il risque par ailleurs d'introduire des distorsions en provoquant par exemple des atténuations de valeurs inégales sur les différents modes transmis et des réflexions vers la source.

Pour pallier ces inconvénients, l'invention propose un atténuateur pour liaison par fibre optique, comprenant un premier embout pour maintenir l'extrémité d'une première fibre, un deuxième embout pour maintenir l'extrémité d'une seconde fibre, et une pièce de liaison dans laquelle sont fixés les embouts de telle manière que les extrémités planes des fibres sont pressées l'une contre l'autre et que les fibres restent sensiblement coaxiales le long d'un axe commun, principalement caractérisé en ce qu'il comprend en outre un fragment de film semi-réfléchissant inséré entre les embouts, que l'extrémité de la deuxième fibre est sensiblement perpendiculaire à l'axe commun, et que l'extrémité de la deuxième fibre est inclinée par rapport à cet axe commun d'un angle ne permettant pas la propagation guidée dans la première fibre de la lumière réfléchie vers celle-ci par le fragment de film.

D'autres particularités et avantages de l'invention apparaîtront clairement dans la description suivante présentée à titre d'exemple non limitatif et faite en regard des figures annexées qui représentent :

    - la figure 1, un connecteur pour relier deux fibres optiques ;

    - la figure 2, l'extrémité de la pièce 108 de la figure 1 vue de face ;

    - la figure 3, le schéma d'une liaison par fibres optiques ;

    - la figure 4, un tableau récapitulatif d'une série de mesures ;

    - la figure 5, l'extrémité de la pièce 108 de la figure 1 après un usinage permettant de modifier le connecteur pour un faire un atténuateur.

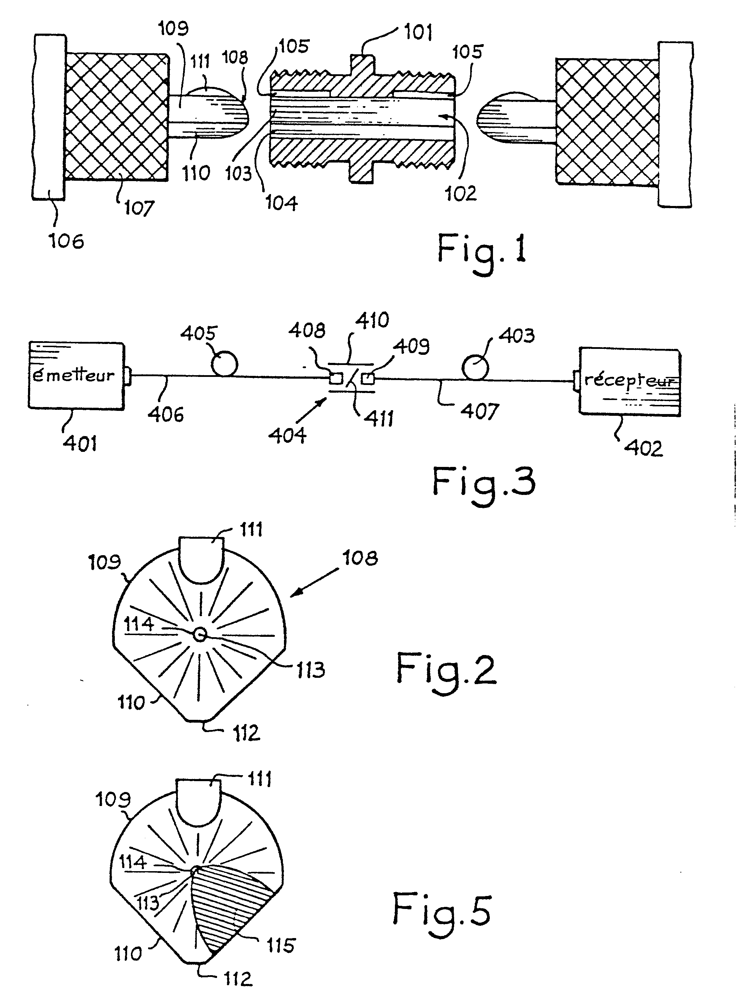

Un connecteur pour réunir ensemble les extrémités de deux fibres optiques est fondamentalement composé des trois pièces représentées sur la figure 1.

La pièce de liaison centrale est formée d'un manchon 101 cylindrique fileté aux deux extrémités. Ce manchon est percé axialement selon un canal 102, dont la section permet de recevoir la pièce mâle représentée de face sur la figure 2. Ce canal comporte une partie supérieure 103 de section sensiblement circulaire, qui se termine dans le bas par une partie 104 de section sensiblement triangulaire. De surcroît la partie supérieure circulaire comporte deux lamages longitudinaux 105 à chaque extrémité.

Les deux autres pièces, identiques entre elles, sont des embouts destinés à être fixés sur les extrémités des fibres optiques à réunir. Ils comportent un corps 106 muni d'une bague vissante 107. Cette bague vissante tourne sur le corps 106 et est munie d'un filetage femelle qui vient se fixer sur le filetage mâle de la pièce de liaison centrale. A l'intérieur du corps 106 se trouve une tige 108 qui est fixée à ce corps de manière libre afin de présenter un débattement assez important. Cette tige déborde de l'extrémité avant du corps 106 et de la bague 107 de manière à pouvoir pénétrer dans le canal 102 de la pièce de liaison centrale.

La section de la tige 108 est la même que celle du trou 102, avec un léger jeu permettant de la faire pénétrer dans ce canal à frottement doux. Elle comporte donc une partie supérieure 109 de forme circulaire, et une partie inférieure 110 de forme triangulaire. Cette partie inférieure triangulaire est usinée avec un soin particulier pour former une surface de référence qui va coulisser sur la surface de référence 104 de la pièce centrale.

La tige 108 comporte en plus, à la partie supérieure de sa partie cylindrique, une lame de ressort 111 qui fait saillie hors de cette tige. Lorsque l'on enfonce la tige 108 dans le canal 102, la lame de ressort 111 vient prendre place dans le lamage 105 et applique la partie inférieure triangulaire 110 de la tige dans la partie inférieure triangulaire 104 du canal, ce qui assure le positionnement voulu avec la précision désirée.

L'extrémité de cette tige 108 est représentée de face sur la figure 2, où l'on distingue nettement la partie circulaire 109 et la partie triangulaire 110. Le sommet du triangle formant cette partie 110 est arasé pour former un méplat 112, afin de garder la précision de positionnement

4

de la tige dans le canal.

La tige 108 est percée axialement d'un trou dans lequel, lors du montage du connecteur, on scelle l'extrémité de la fibre optique, à l'aide d'une colle adéquate, en maintenant cette fibre dans l'axe de la tige selon un positionnement repéré par rapport à la partie triangulaire 110.

L'extrémité de la tige 108 est légèrement pointue et, lorsque la colle qui maintient la fibre dans cette tige est polymérisée, on polit le bout de la tige perpendiculairement à son axe, ce qui délimite une surface d'appui perpendiculaire à l'axe et comportant l'extrémité de jonction de la fibre 113 entourée d'une couronne de colle 114.

Le deuxième embout, fixé à l'extrémité de l'autre fibre à connecter à la fibre 113, est identique au premier.

Ainsi donc, quand on voudra connecter les deux fibres ensemble, on introduira les deux tiges 108 dans le canal 102 de la pièce centrale. Ces tiges se positionneront sur la partie triangulaire 104 de ce canal, et les extrémités des fibres seront alors sensiblement coaxiales, avec une erreur de positionnement en x et en y extrêmement réduite. En vissant les bagues 107 sur la pièce 101, les deux extrémités des fibres seront appuyées l'une contre l'autre et l'énergie lumineuse pourra passer d'une fibre à l'autre. Le cas échéant, on mettra une goutte d'un liquide adaptateur d'indice sur l'extrémité de l'une des tiges 108 de manière à parfaire la liaison optique entre les deux fibres.

Pour pouvoir apprécier l'influence des différents paramètres du connecteur sur une liaison, on a réalisé un montage de mesure schématisé sur la figure 3.

Un émetteur 401 permet d'émettre un signal lumineux connu sur une fibre optique 406, du type 50-125 microns. Pour que ce montage corresponde à une disposition concrète relativement réaliste, cette fibre mesure environ 1000 mètres de long et est bobinée sur un tambour 405 pour occuper un minimum de place. Elle est raccordée via un connecteur 404 du type décrit plus haut à une deuxième fibre 407 du même type, de longueur 500 mètres, bobinée sur un autre tambour 403. Ce connecteur comprend une pièce centrale 410 et deux embouts 408 et 409.

L'extrémité de cette deuxième fibre est raccordée à un récepteur 402, qui permet de mesurer le signal lumineux reçu.

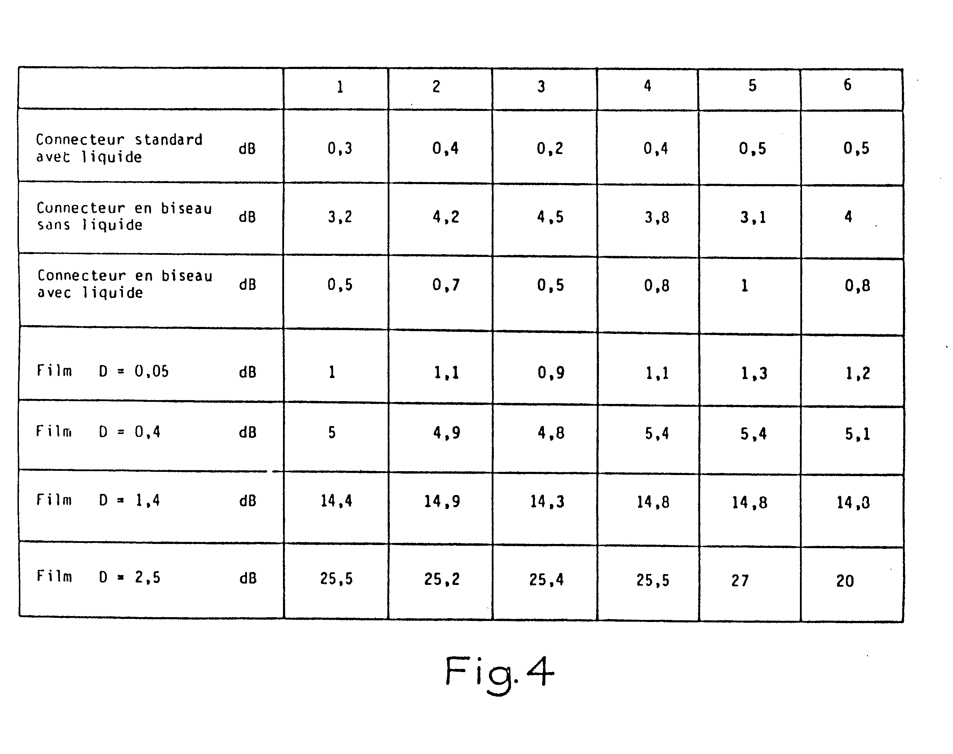

Afin de pouvoir apprécier la dispersion des résultats obtenus, on a fait six séries de mesure. Les résultats de ces mesures sont répertoriés dans le tableau de la figure 4, qui comporte six colonnes correspondant aux six séries de mesures.

La première ligne donne les affaiblissements en décibels pour un connecteur standard utilisé avec un liquide adaptateur d'indice.

Une mesure complémentaire, non reprise dans le tableau en raison de la très faible dispersion des mesures selon le désalignement du connecteur, consiste à mesurer en rétrodiffusion du côté de l'émetteur la lumière réfléchie à l'extrémité de la fibre. Cette mesure se fait selon une méthode tout à fait courante. Elle donne une valeur remarquablement constante de 4% de réflexion dans le cas d'une fibre clivée à 90 degrés et sans liquide adaptateur d'indice. En plaçant à l'extrémité un liquide adaptateur d'indice, on constate une chute de 10 décibels du niveau rétrodiffusé.

Pour atténuer la lumière transmise il est très rapidement indispensable quand on augmente l'absorption d'utiliser non pas un filtre absorbant, qui pourrait être détérioré par l'énergie absorbée, mais au contraire un filtre partiellement réfléchissant, tel qu'un morceau de polytéréphtalate d'éthylène métallisé, par exemple par un dépôt de chrome. Dans ce cas la lumière se partage essentiellement entre une partie transmise et une partie réfléchie, la partie absorbée étant tout à fait négligeable et ne faisant courir aucun risque au film.

Par contre dès que le coefficient d'atténuation que l'on veut obtenir prend une valeur quelque peu importante, une grande partie de l'énergie lumineuse est réfléchie vers l'émetteur. Ce dernier n'est nullement conçu pour cela, et l'énergie ainsi reçue en retour peut le perturber gravement. La situation est tout à fait analogue à celle qui se présente dans les circuits hyperfréquences, quand le rapport d'ondes stationnaires augmente.

Si l'on ne peut éviter la rétrodiffusion, on peut par contre éviter que la lumière réfléchie ne se propage en sens inverse jusque vers l'émetteur. Pour cela on peut polir l'extrémité de la fibre en biais, de manière à ce

6

que la lumière soit réfléchie sous un angle qui ne lui permette plus de se propager dans le coeur de la fibre, mais qui tend à la faire sortir de ce dernier. Cet angle est bien entendu fonction des caractéristiques de la fibre, mais, compte tenu des technologies de fabrication de celle-ci, une valeur de 11 degrés permet dans tous les cas d'éviter la propagation guidée en sens inverse. Cet angle critique correspond à celui qui limite la propagation guidée à partir d'une source émettrice située à l'extrémité de la fibre.

Il serait tout à fait difficile de polir l'extrémité seule de la fibre selon un tel angle. Il est par contre beaucoup plus facile d'utiliser un embout de connecteur standard muni de sa fibre et de polir l'extrémité de cet embout selon l'angle voulu.

L'extrémité d'un tel embout a été représentée sur la figure 5 avec les mêmes références que pour la figure 2. On distingue de plus sur cette figure une portion 115, polie selon un angle de 11 degrés, qui vient mordre sur l'extrémité de l'embout, en partant de l'une des faces de la partie triangulaire inférieure 110 pour déborder légèrement l'axe de l'embout au-delà de l'extrémité de la fibre. Ainsi on a poli en même temps, selon l'angle voulu, l'extrémité de l'embout, l'extrémité de la fibre, et le cylindre de colle qui maintient la fibre dans l'axe de l'embout.

On a dans ces conditions repris les mesures avec le montage de la figure 3, dans lequel l'embout 408 du connecteur 404, situé à l'extrémité de la fibre émettrice 406, a été modifié conformément à la figure 5.

Les mesures d'atténuation ainsi obtenues sont reportées dans le tableau de la figure 4, en deuxième ligne pour le connecteur sans liquide adaptateur d'indice, et en troisième ligne avec un tel liquide. On constate que l'on obtint une augmentation de l'atténuation, qui reste toutefois faible lorsque l'on garde le liquide adaptateur d'indice.

De plus la réflexion tombe de 40 décibels par rapport au cas de la face perpendiculaire à l'axe de la fibre.

On peut alors, pour obtenir une atténuation supplémentaire du signal lumineux transmis, insérer entre les deux embouts du connecteur une rondelle de film réfléchissant telle que 411, obtenu par exemple par un dépôt de nickel-chrome sur un film de polytéréphtalate d'éthylène. Un tel

7

film est disponible couramment sous une épaisseur de 12 microns, qui est faible mais procure néanmoins une très bonne résistance mécanique. L'épaisseur de la couche permettant d'obtenir l'atténuation par réflexion d'une partie de la lumière reçue dépendra de l'atténuation désirée mais ne dépassera pas 600 Angström pour une densité déjà importante de 2,5. Une épaisseur aussi faible du film et de sa couche réfléchissante permet d'éviter que l'atténuation due au film ne soit différente selon les modes, ce qui provoquerait d'une part une atténuation sélective, mais surtout une atténuation totale variable selon la position du connecteur le long de la liaison, ce qui est tout à fait inacceptable.

Les valeurs de l'atténuation obtenue avec des densités variant entre 0,05 et 2,5 sont répertoriées dans les lignes 4 à 7 du tableau de la figure 4. On remarque notamment que la dispersion est faible et que l'on peut atteindre aisément une atténuation de 25 décibels, ce qui en pratique correspond à toute la gamme souhaitée.

On constate également que ce film n'influence en rien la rétrodiffusion, qui reste toujours aussi faible.

La fabrication d'un tel atténuateur se fait donc par modification d'un connecteur de type courant. Cette modification peut se faire très aisément sur le terrain lors du montage de ce connecteur.

En effet, il est usuel pour raccorder deux fibres optiques d'une liaison, de procéder au montage des deux embouts sur les extrémités des fibres à l'endroit même où le raccordement doit se faire. Pour cela on insère chaque extrémité des fibres, préalablement clivées à la longueur voulue, dans les embouts correspondants. Elles sont maintenues en place par un appareillage, et scellées avec une colle à prise rapide. Un appareil de polissage permet ensuite, lorsque cette colle est durcie, de polir l'extrémité des embouts afin d'obtenir un état de surface convenable permettant le raccordement. Quand ces opérations sont terminées, on visse un premier embout sur la pièce de liaison centrale, on dépose une goutte de liquide adaptateur d'indice sur l'extrémité de cet embout, et on visse le deuxième embout sur la pièce de raccordement.

Les différents outillages nécessaires sont contenus dans une trousse de montage connue en elle-même.

S'il est alors nécessaire de prévoir au niveau d'un tel raccordement, d'atténuer le signal transmis en modifiant le connecteur pour qu'il devienne un atténuateur, il suffit, au stade du polissage de l'un des embouts, de décaler de la valeur convenable, c'est-à-dire le plus souvent de 11 degrés, l'appareil de polissage de cette extrémité. On remarque que la précision sur cet angle peut être faible et que l'azimut par rapport à l'axe de la fibre de la partie dépolie est sans importance. La trousse de montage comportera en plus un jeu de rondelles découpées dans des films métallisés et repérés selon leur densité. La taille de ces rondelles sera prévue pour qu'elles se logent dans le corps de la pièce centrale du connecteur. A la séquence de montage, après avoir fixé le premier embout, on placera une goutte de liquide adaptateur d'indice, puis la rondelle, une deuxième goutte de liquide, et on terminera par la fixation du deuxième embout. Cette opération ne sera donc pas sensiblement plus longue que le montage normal d'un connecteur, puisque le polissage est une étape normale de la séquence de montage. La détermination de la densité de la rondelle à utiliser peut se faire par exemple par une simple mesure de l'énergie lumineuse reçue sur l'embout disposé sur la fibre émettrice. En connaissant l'énergie à transmettre, on en déduit l'atténuation à obtenir, et la densité du film selon un tableau, semblable à celui de la figure 4 et obtenu par étalonnage préalable.

Le connecteur de base modifié pour fabriquer un atténuateur étant essentiellement démontable, il est tout à fait possible en cas de besoin de modifier l'atténuation obtenue en changeant la rondelle de film semi-réfléchissante. Il est même parfaitement possible de supprimer cette rondelle puisque, ainsi qu'on le voit dans les résultats répertoriés dans le tableau de la figure 4, le polissage en biseau n'amène en soi qu'un supplément d'atténuation très faible. Le cas échéant il serait tout à fait possible de revenir à un connecteur standard, en procédant à un repolissage de l'extrémité de l'embout pour obtenir de nouveau une face perpendiculaire à l'axe de la fibre, car cette opération ne présente aucune difficulté et est extrêmement rapide.

## REVENDICATIONS

1. Atténuateur pour liaison par fibre optique, comprenant un premier embout (408) pour maintenir l'extrémité d'une première fibre (406), un deuxième embout (409) pour maintenir l'extrémité d'une seconde fibre (407), et une pièce de liaison (410) dans laquelle sont fixés les embouts de telle manière que les extrémités des fibres sont maintenues l'une contre l'autre et que les fibres restent sensiblement coaxiales le long d'un axe commun, caractérisé en ce qu'il comprend en outre un fragment de film (411) semi-réfléchissant inséré entre les extrémités des embouts, que l'extrémité de la deuxième fibre (407) est sensiblement perpendiculaire à l'axe commun, et que l'extrémité de la première fibre (406) est inclinée par rapport à cet axe commun d'un angle ne permettant pas la propagation guidée dans la première fibre de la lumière réfléchie vers celle-ci par le fragment de film.

2. Atténuateur selon la revendication 1, caractérisé en ce que les extrémités des embouts (408, 409) et le fragment de film (411) sont noyés dans un liquide adaptateur d'indice.

3. Atténuateur selon l'une quelconque des revendications 1 et 2, caractérisé en ce que l'angle d'inclinaison de l'extrémité de la deuxième fibre par rapport à l'axe commun est de sensiblement 79 degrés.

4. Atténuateur selon l'une quelconque des revendications 1 à 3, caractérisé en ce que le film est en téréphtalate d'éthylène métallisé.

5. Atténuateur selon la revendication 4, caractérisé en ce que la métallisation du film est un dépôt de nickel-chrome.

6. Connecteur pour liaison par fibre optique, du type comprenant deux embouts (106) vissés sur une pièce de liaison (101), chaque embout comportant une pièce mâle (108) munie d'une partie triangulaire (110) formant surface de référence pour un trou central destiné à recevoir l'extrémité (113) d'une fibre qui y est scellée par une colle (114), la pièce de liaison comportant un canal femelle muni d'une partie triangulaire (104) pour recevoir les surfaces de référence des embouts et aligner les extrémités des fibres selon un axe commun, l'extrémité de l'un des embouts étant polie simultanément avec l'extrémité de la fibre et la colle qui sont dans son trou perpendiculairement à l'axe commun, caractérisé en ce que l'extrémité de l'autre embout est polie simultanément avec l'extrémité de la fibre et la colle qui sont dans son trou selon une inclinaison déterminée par rapport à l'axe commun, et qu'il comprend en outre un fragment de film semi-réfléchissant pincé entre les extrémités des embouts, pour former un atténuateur selon l'une quelconque des revendications 1 à 5.

0083278

1/2

Fig. 1

Fig. 3

Fig. 2

Fig. 5

émetteur 401
récepteur 402

| | | 1 | 2 | 3 | 4 | 5 | 6 |
|---|---|---|---|---|---|---|---|
| Connecteur standard avec liquide | dB | 0,3 | 0,4 | 0,2 | 0,4 | 0,5 | 0,5 |
| Connecteur en biseau sans liquide | dB | 3,2 | 4,2 | 4,5 | 3,8 | 3,1 | 4 |
| Connecteur en biseau avec liquide | dB | 0,5 | 0,7 | 0,5 | 0,8 | 1 | 0,8 |
| Film   D = 0,05 | dB | 1 | 1,1 | 0,9 | 1,1 | 1,3 | 1,2 |
| Film   D = 0,4 | dB | 5 | 4,9 | 4,8 | 5,4 | 5,4 | 5,1 |
| Film   D = 1,4 | dB | 14,4 | 14,9 | 14,3 | 14,8 | 14,8 | 14,8 |
| Film   D = 2,5 | dB | 25,5 | 25,2 | 25,4 | 25,5 | 27 | 20 |

Fig.4